# EUROPEAN PATENT APPLICATION

(11) **EP 0 677 433 A1**
(43) Date of publication of application: **18.10.1995**
(21) Application number: 95302131.8
(22) Date of filing: 30.03.1995
(51) Int. Cl.: B60R 21/26

(54) **Airbag module and diffuser therefor**

(30) Priority: 15.04.1994 US 228332
(71) Applicant: MORTON INTERNATIONAL, INC., Chicago, Illinois 60606 (US)
(72) Inventor: Lauritzen, Donald R., Hyrum, Utah 84319 (US); Rose, Larry D., Layton, Utah 84040 (US); Folsom, Marc D., Mitaka-shi, Tokyo 181 (JP); Gunn, Brian D., Ogden, Utah 84401 (US)
(74) Representative: Bankes, Stephen Charles Digby

(57) **Abstract**

An air bag inflatable restraint module (410) comprising a reaction canister (424) accommodating an elongate inflator (420) with outlet ports (423), and an apertured flat diffuser (416) for redirecting and diffusing inflation gas. Apertures in the diffuser (416) may be symmetrically or asymmetrically disposed and may comprise circular apertures in substantial non-alignment with the inflator outlet ports (423) or may be louvred apertures each of which includes a slanted slat portion (471a-h). The slanted slats (471a-d) of a first group of apertures may be oppositely directed to the slats (471e-h) of a second group of apertures. Two groups of apertures may be separated by an aperture-free diffuser region (475). A filter (477) for trapping particulate material issued by the inflator (420) may be connected to an underside of the diffuser.

## Description

This invention relates air bag module diffusers such as used in systems for the passive restraint of vehicle occupants.

Safety restraint systems which self-actuate from an undeployed to a deployed state without the need for intervention by the operator, i.e., "passive restraint systems", and particularly those restraint systems incorporating inflatable bags or cushions, as well as the use of such systems in motor vehicles have gained general appreciation.

It is well known to protect a vehicle occupant using a cushion or bag that is inflated with gas, e.g., an "air bag", when the vehicle encounters sudden deceleration, such as in a collision. During deployment, the rapidly evolving gas with which the bag is typically filled is an inert gas, e.g., nitrogen. In such systems, the air bag is normally housed in an uninflated and folded condition to minimize space requirements. In an emergency, gas is discharged from an inflator to rapidly inflate the air bag. The air bag, upon inflation, serves to restrain the movement of the vehicle occupant as the collision proceeds. In general, such air bags are commonly designed to be inflated in no more than a few milliseconds.

Vehicular inflatable restraint systems generally include multiple crash sensors generally positioned about or mounted to the frame and/or body of the subject vehicle and serve to sense sudden decelerations by the vehicle. In turn, the sensor sends a signal to an air bag module or assembly strategically positioned within the riding compartment of the vehicle to actuate deployment of the air bag. In general, an air bag provided for the protection of a vehicle driver, i.e., a driver side air bag, is mounted in a storage compartment located in the steering column of the vehicle. Whereas, an air bag for the protection of a front seat passenger, i.e., a passenger side air bag, is typically mounted in the instrument panel/dash board of the vehicle.

Typical air bag restraint systems make use of an air bag module which generally includes an outer reaction housing or canister, commonly referred to as a "reaction can" or, more briefly, as a "can". The reaction canister generally serves to support or contain other components of the air bag module system, including what is referred to as a "air bag inflator" or, more briefly, as an "inflator", or, alternatively, as a "generator". The inflator, upon actuation, acts to provide the gas to inflate the air bag.

The inflator used in such a system is typically either of a pyrotechnic or hybrid type. Pyrotechnic inflators generally contain a gas generating material which, upon activation, generates gas used to inflate the air bag. In general, the inflation gas produced by a pyrotechnic inflator is emitted from openings or emission ports along the length of the inflator. In contrast, hybrid type inflators in addition to a body of ignitable pyrotechnic material generally contain as the primary inflation gas a stored, compressed gas which, upon proper actuation, is expelled from the inflator. As a consequence of the physics associated with the storage of compressed gases, the container used to store this compressed gas typically has a cylindrical shape. Furthermore, the discharge of gas from such a cylindrically shaped gas storage container typically occurs by way of openings or emission ports at only one end of the cylindrical container. To attain proper bag deployment, however, it is generally desired that the emission of gas into the air bag from such a storage container be done in a fairly uniform manner. With typical air bag/inflator assemblies, such uniform emission is generally attained by having a relatively even emission of gas into the deploying bag along the length of the gas inlet opening of the air bag connected, directly or indirectly, to the inflator. In this way the bag is properly uniformly deployed and the risk of the bag deploying in a skewed manner due to the discharge of gas from only one end of the storage container is avoided.

In addition, the burning of pyrotechnic (gas generating) and initiation materials in pyrotechnic and hybrid inflators invariably results in the undesired production of hot particulate material, which if not properly controlled can result in damage to the corresponding air bag.

Also, upon inflation and deployment of the air bag, the reaction housing canister acts to absorb or retransmit the resulting air bag deployment forces to the vehicle. The reaction housing typically is an open-mouthed container into which the air bag, in an uninflated and folded condition, is also placed. In prior art devices the air bag is commonly attached either about the inflator or to the reaction housing itself. As a consequence of such attachment, the reaction housing is especially susceptible to deformation as a result of the forces produced during and associated with bag deployment. For example, when the air bag is inflated the peripheral portion of the opening of the air bag is typically pushed outwardly with respect to the housing oftentimes resulting in deformation of the housing. By virtue of the openmouth shape or form generally taken by these reaction housings such deformation is generally referred to as "bell-mouthing".

In order to resist such deformation and to prevent the peripheral portion of the gas inlet opening of the air bag from moving outwardly with respect to the housing, conventional air bag devices have adopted various measures.

In practice, bell-mouthing can be reduced or limited by fabricating the reaction housing using a metal of greater thickness and/or strength. Such use of a thicker metal, however, can result in a significant and detrimental increase in the overall weight of the housing. of course, weight minimization is an especially important concern in modern vehicle design as a result of the impact the weight of a vehicle has on vehicular fuel mileage. The alternative of fabricating the reaction housing using a stronger type of material of construction is not always practical as stronger materials of construction generally have higher material costs associated with them and would thus increase the cost associated with such safety restraint systems.

U.S. Patent No. 4,941,678, Lauritzen et al., issued July 17, 1990, discloses a lightweight housing canister assembly having a design avoiding such bell-mouthing. The assembly includes a tether strap, at the mouth inside the bag, that restricts the loading of the reaction canister and positioned transversely thereto. This tether strap retains the spreading forces at the mouth of the canister upon bag deployment. This allows the use of a lighter section at the mouth of the canister and eliminates the need for reinforcing flanges along the sides of the canister, which flanges would undesirably increase the weight of the assembly. For retaining the bag in the assembly, the patent discloses that notches formed on the inner side of each of the walls of the reaction canister body form a bag retaining ring shelf for retaining a continuous attachment ring formed at the gas inlet opening of the inflatable bag.

In the past, various vehicular safety restraint inflatable cushion designs have employed thin strips of material (referred to as "tethers") which are attached to opposed internal sides of the cushion. Such tethers serve to limit the extension of the cushion upon deployment. Thus, whereas an untethered driver side air bag will typically extend about 15 to 20 inches towards the driver, a tethered air bag will only typically extend about 10 to 13 inches towards the driver.

U.S. Patent No. 5,131,680 discloses a type of hybrid inflator and includes a diffuser. The disclosed inflator assembly includes a generally cylindrical container, a generally cylindrical diffuser, and a manifold assembly, secured to one end of the container. The diffuser is larger in diameter than the container and is mounted to encircle both the container and the manifold assembly. Further, the diffuser, which has openings through which the gas is directed to the air bag, extends substantially the entire length of the manifold assembly and a significant portion of the length of the container. Because this diffuser encircles both the container and the manifold assembly and must be able to withstand the stresses applied thereto during operation, such diffusers are generally more bulky and weighty than would be preferred.

In addition, there are a number of U.S. patents that at least in part relate to air bag retention and/or conveyance of the inflating gas into the air bag.

For example, U.S. Patent No. 4,986,569 discloses an air bag attachment system comprising a canister having a shoulder on a peripheral edge flange for seating of a metal rod disposed in a channel in the air bag. The edge flange of the canister is reentrantly folded about the rod to retain the air bag on the canister.

U.S. Patent No. 5,069,480 discloses an air bag retainer assembly which includes a pillow or air bag assembly including a pillow retainer to which is attached an inflatable pillow or air bag and which retainer is secured to the reaction housing assembly. Gas, supplied by a gas generator, will flow upon activation through openings provided in the retainer and into the pillow or air bag. The air bag is attached to the retainer by means of a V-shaped hem sewn about the end of the bag. Upon movement of the hem and air bag forward, the open side of the V-shaped hem engages and envelopes the circumferential edge of the retainer.

Examples of other such patents include: U.S. Patent No. 3,708,181 which specifies the use of a nozzle through which pressure is transferred from a gas tank to an inflatable bag with the tank and nozzle joined together by way of tongue and groove joints while a continuous, flexible resilient holding member holds the edge portions of the bag in position in a groove formed around the nozzle discharge; U.S. Patent No. 4,111,457 which discloses the use of a clamping ring to secure the edge of an air bag to the housing of the inflatable restraining device; U.S. Patent No. 4,136,894 which discloses the use of an apertured diffuser to cover each of three independent gas generant-containing chambers of a specifically designed housing; U.S. Patent No. 5,062,664 which specifies a hollow cylindrical member or canister having an opening into which a gas generator is inserted and having the open end of the air bag envelope the cylindrical member; and U.S. Patent No. 5,058,919 which discloses an air bag module construction and assembly technique wherein a screen-shaped member is used to retain a folded air bag in the housing.

Nevertheless, a low weight and low cost solution to the problems of bell-mouthing and uniform gas distribution and bag deployment is still desired.

In practice, the component parts of such inflatable restraining devices, particularly the inflatable air bag and the housing, are joined and held together by means of selected fasteners such as screws, rivets or bolts. For example, a selected fastener is typically passed through fastener holes which have been preformed in the respective parts to be fastened together. Unfortunately, a problem frequently experienced in the assembly of these inflatable restraining units is difficulty in achieving and maintaining desired and proper fastener hole alignment of the respective parts to be fastened together. Also, in order to avoid undesired point loading of the stresses generated upon bag deployment, it is generally preferred to secure or fasten the bag into the assembly by means of fastening the bag between two load bearing materials (e.g., metals), such as between the reaction canister and metal retaining flanges or a metal ring placed about the bag gas inlet opening, for example. In this way, undesired loading of bag deployment stresses at or about the fastener holes in the bag fabric is reduced and preferably avoided.

In general, such fastening is done through the reaction canister itself, thereby simplifying the assembly process as the canister, bag and metal retaining flanges or metal ring are all simultaneously fastened together by means of such fastening. Unfortunately, it is difficult to simultaneously maintain proper alignment of the fastener holes in the canister, bag and retaining flange as the fastener holes in the relatively flexible bag material tend to become easily displaced relative to the fastener holes in the canister and/or retaining flange. As a result, an assembly worker must either be dedicated to maintaining the fastener holes in proper alignment or else a worker will have to stop whatever else that worker was doing in order to realign the fastener holes in the bag with the fastener holes in the canister and in the retaining flange. This of course slows and increases the cost of the assembly process. Further, a requirement for human intervention to reeffect proper fastener hole alignment prevents implementation of a more fully automated assembly process.

Thus, a relatively simple, low cost bag attachment and retaining mechanism whereby the fastener holes in the air bag are maintained in alignment with the fastener holes in adjacent members and which mechanism permits an easy adaptation to automated production and assembly is desired.

Air bag inflators commonly have associated with them an electrically actuatable igniter which upon actuation, in the case of a pyrotechnic type inflator as described above, ignites a gas generating material contained within the inflator. As the gas generating reaction is typically highly exothermic, a large amount of heat is generally produced during the gas generation process. Of course, human contact with this heat, either directly or indirectly by contact with surface(s) heated as a result of direct contact by the heat, is desirably to be avoided. Also, contact by the air bag with the hot gases by the inflator can itself cause damage to the air bag and result in the malfunctioning of the air bag. For example, in designs wherein the air bag is packed adjacent the inflator, during the short time interval immediately following the onset of actuation, the inflator can discharge gases at both such a high rate of speed and in such a fashion whereby the gases directly impinge relatively small areas of the interior surface of the air bag, and the bag itself can suffer some type of degradation such as having a hole burned through it and thereby prevent the proper functioning of the system.

Thus, a system which allows for safe air bag deployment, including the safe dissipation of heat generated during the deployment process, without harm to the occupants of the vehicle either via the cause for the deployment of the air bag, e.g., a "crash" by the vehicle, or through the bag deployment process itself, is desired.

Further, while it is known to use tethers within an air bag to limit the range of extension of the air bag upon deployment, the inclusion of such tethers can complicate the production process and increase manufacturing and production costs.

Thus, a low cost assembly improvement to effect gas flow redirection and cushion deployment, as an alternative or add-on to reliance on such tethers, is needed.

In addition, reducing the size and weight of air bag module assemblies is important to facilitate the incorporation of such assemblies in various makes and styles of vehicles without significantly detrimentally effecting either the fuel mileage or the appearance of the vehicle.

Also, assembly designs which facilitate production and which allow for unobtrusive product quality checks are important aspects in the modern competitive economic world environment.

Thus, an easy to assemble, light weight, small and relatively inexpensive air bag module assembly is desired.

A general object of the invention is to provide an improved inflatable restraint air bag module.

A more specific objective of the invention is to overcome one or more of the problems described above.

The general object of the invention can be attained, at least in part, through an inflation gas diffuser for an inflatable restraint air bag module. In practice, such a module typically includes an inflatable air bag having an inflation gas inlet opening, an elongated inflator having a longitudinal length and having a plurality of inflation gas outlet ports spaced along the longitudinal length thereof to emit inflation gas upon actuation thereof, and a reaction canister forming a housing for the air bag and the inflator.

The inflation gas diffuser is interposed between the inflator inflation gas outlet ports and the air bag inflation gas inlet opening to effect inflation gas diffusion and redirection. The inflation gas diffuser includes at least one substantially flat face member having a longitudinal length and a peripheral edge defined thereabout.

In a first embodiment, the face member includes a plurality of spaced inflation gas passage apertures for conveying inflation gas from the inflator to the air bag, with the spaced inflation gas passage apertures being in substantial nonalignment with the inflation gas outlet ports of the inflator.

In a second embodiment, the face member has a topside, an underside, a longitudinal length and a peripheral edge defined thereabout. The face member also includes a louvered aperture formed with a slanted slat positioned on the topside of the face member for conveying and directing inflation gas from the inflator to the air bag.

The invention further comprehends an inflation gas diffuser for an inflatable restraint air bag module. The module forms a housing for an inflatable air bag having an inflation gas inlet opening and an inflator which, upon actuation, emits inflation gas from at least one inflation gas outlet port. In the module, the diffuser is interposed between the inflator inflation gas outlet port and the air bag inflation gas inlet opening.

The diffuser includes at least one substantially flat face member having a longitudinal length and a peripheral edge defined thereabout. The face member includes at least two sets of louvered apertures for conveying and directing inflation gas from the inflator to the air bag. Each of the louvered apertures includes a slanted slat positioned on the topside of the face member. The slanted slats of the two sets of louvered apertures are angled in opposed directions and the two sets are spaced apart by means of an openingfree, solid face region. Additionally, a screen particulate barrier is joined at the underside of the face member to underlie the louvered apertures.

The prior art fails to provide module assemblies having an inflation gas diffuser which properly facilitates and controls air bag cushion deployment to the desired extent and which fosters gas flow redirection and removal of particulate material from the gas flow.

As used herein, references to openings, holes or apertures of the subject diffuser devices as being in "substantial nonalignment" with inflator inflation gas outlet ports are to be understood to refer to alignment whereby gas normally emitted from the gas outlet ports (i.e., gas emitted perpendicular to the plane of the inflator surface) impinges onto the diffuser device, e.g., the underside of the face member, prior to passage into the corresponding air bag. Thus, passage of the inflation gas through the apertures in the diffuser face member requires a redirection of the gas flowing out of the inflator. That is, the gas flow changes direction between exiting from the inflator and passing through the diffuser face member. In practice, the diffuser devices of the invention will result in redirection of at least about 50 percent, preferably at least about 75 percent, of the inflation gas emitted from the inflator prior to passage into the corresponding air bag.

Other objects and advantages will be apparent to those skilled in the art from the following detailed description taken in conjunction with the appended claims and drawings, in which:

FIG. 1 is a partially exploded perspective view of an air bag module assembly not constructed in accordance with the invention which is included to illustrate the basic components included in such an assembly.

FIGS. 2A, 2B, and 2C are top, partial sectional side, and partial sectional end views of an air bag module assembly having a diffuser, in accordance with one embodiment of the invention.

FIG. 3 is a perspective schematic of the diffuser device of the air bag module assembly shown in FIGS. 2A, 2B, and 2C.

FIGS. 4A, 4B, and 4C are top, partial sectional side, and partial sectional end views of an air bag module assembly having a diffuser, in accordance with another embodiment of the invention.

FIG. 5 is a partial sectional side view of an air bag module assembly, similar to that shown in FIG. 2B but now showing the inclusion of screen member, in accordance with one embodiment of the invention.

FIG. 6 is a top view of an air bag module assembly having a diffuser, in accordance with yet another embodiment of the invention.

FIGS. 7 is a top view of an air bag module assembly having a diffuser, in accordance with yet still another embodiment of the invention.

According to the invention, a specially constructed and designed diffuser device, described herein, is used in air bag module assembly. The diffuser device, in addition to fostering desired gas diffusion as its name indicates, can also assist in: 1) facilitating module assembly; 2) maintaining proper bag retention within the assembly, and 3) maintaining desired separation of the hot inflator surfaces from both the surface of the air bag as well as from contact by the vehicle occupants. In addition, the diffuser device, as used, can serve to control bellmouthing of the reaction canister, thereby assisting in maintaining the integrity of the reaction canister.

While the invention will be described below with reference to a passenger side air bag module assembly for automotive vehicles including vans, pick-up trucks, and particularly automobiles, it is to be understood that the invention also has applicability not only with other types or kinds of air bag module assemblies for automotive vehicles including driver side assemblies, but also other types of vehicles including, for example, airplanes. With respect to automotive vehicles it will also be appreciated that due to usual physical differences between passenger and driver side air bag module assemblies, including the typical difference in size with passenger side air bags generally being much larger than those used in driver side assemblies, the invention has particular utility in passenger side air bag module assemblies.

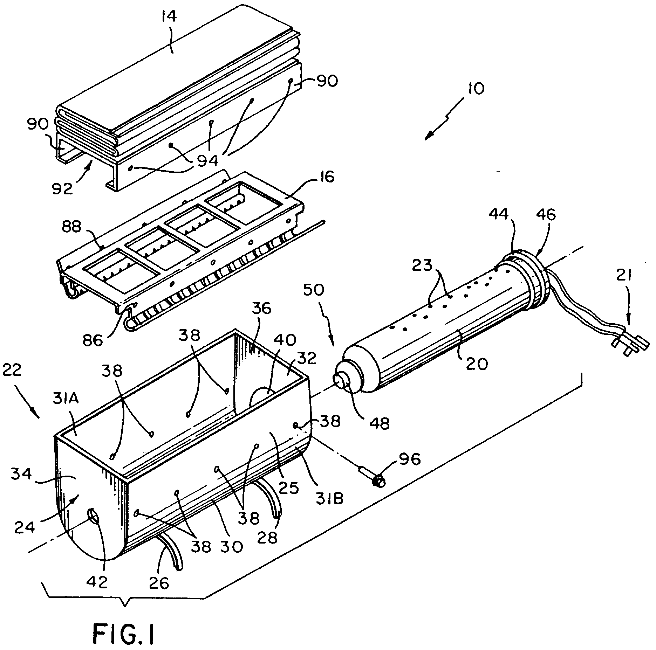

Referring initially to FIG. 1, an exploded perspective view of an air bag module assembly, generally designated 10, is shown. The air bag module assembly 10 is a self-contained unit and includes a folded air bag 14; a diffuser 16; a gas generator or inflator 20 with associated wiring/connections 21 to permit, for example, connection of the inflator to one or more the crash sensors (not shown); and an air bag module enclosure 22.

The inflator 20 includes along its longitudinal length, several rows of axially spaced openings or exhaust ports 23, whereby, upon actuation, inflation gas is emitted from the inflator from at least one lateral side or end thereof.

The enclosure 22 generally includes a reaction housing assembly shown as a reaction canister or "can" 24. It is to be understood that while the practice of the invention is not limited to use in conjunction with reaction canisters made of particular materials of construction, because of a desire to practically reduce and/or minimize the cost and weight of the assembly, reaction canisters are typically made of steel or, preferably, aluminum either in a formed, cast or extruded shape. It is to be further understood that the construction of the reaction canister using other suitable materials of construction such as molded plastic, for example, are also contemplated.

The exterior 25 of the reaction canister 24 has attached thereto installation brackets 26 and 28 provided for facilitating the installation of the module 10 in the instrument panel of the vehicle. It is to be understood that in the practice of the invention, the reaction housing can be secured to an appropriate cooperating portion of the vehicle such as the instrument panel, such as used for typical passenger side module installations, or the steering wheel, such as commonly used for driver side module installations. It is also to be understood that other or additional appropriate attachment means such as brackets, flanges or bars, for example, such as on the exterior of the reaction housing can be used to facilitate attachment of the module to the vehicle as required for particular installations. It will also be appreciated that for some particular installations the reaction housing itself will be adapted to permit installation without the use of any such supplemental attachment means.

Either, as a part of the air bag module assembly or separately, a cover or a door (not shown) is generally provided. Such a cover or door is generally designed to provide closure to the canister. In practice, such doors are typically made of plastic or a metal substrate with a plastic or other cover layer of material typically selected to match or be similar to the material of the outer surface of either the steering wheel (in the case of driver side assembly application) or, the instrument panel (e.g., in the case of a typical passenger side application).

As shown in FIG. 1 the reaction housing 24 includes a first member 30. As shown, the first member can have a roll-form shape and includes side panels, shown as first and second side panels 31A and 31B, respectively. Also, the reaction housing assembly 24 includes first and second end plates 32 and 34, respectively. Upon assembly of the reaction housing 24, the first member 30 and the end plates 32 and 34 cooperate to define an open mouth generally shown as 36. The mouth is typically rectangular in shape but it is to be understood that other shapes or forms including, for example, round, oval, and square, can be appropriately used without departing from the invention, as such shapes or forms can satisfy the needs for particular installations. In addition, the side panels 31A and 31B each include one or more fastener holes 38 in spaced relationship, the use of which fastener holes in the assembly process will be described in more detail below.

The first end plate 32 includes a clearance opening 40 compatible with and into which is received the inflator 20. As described above, typical inflators have a generally cylindrical shape or form. With the use of a cylindrically shaped inflator, the clearance opening 40 in the first end plate 32 will generally be circular in shape. Consistent with the invention, however, it is to be understood that the shape of the opening in the end plate can be appropriately altered to be compatible with inflators of various shapes and sizes. The inflator 20 has an elongated cylindrical configuration and is retained in the reaction housing assembly 24 between the first and second end plates, 32 and 34. As shown, in addition to the circular opening 40 provided in the first end plate 32, a smaller opening 42 is provided in the second end plate 34. Also, as shown, a flange 44 is provided on a first end 46 of the inflator 20 while a stud 48 is provided on the second end 50 of the inflator 20. The size of the opening 40 in the first end plate 32 is such as to allow the inflator 20 to be inserted therein in a snug fit. Similarly, the size and shape of the opening 42 in the second end plate 34 is such as to snugly receive the stud 48 on the second end 50 of the inflator 20. It is, of course, to be understood that other means of securing an inflator are contemplated and can be used in conjunction with the practice of the invention.

The diffuser device 16 includes fastener holes 86 and 88 to permit fastening of the diffuser device within the air bag module assembly, as further described below.

The air bag 14 has an edge 90 about its inlet opening 92 which includes one or more fastener holes 94 in spaced relationship. As illustrated in the embodiment shown in FIG. 1, a single set of fasteners 96 (only one of which is shown) can be used in joining both the air bag 14 and the diffuser device 16 in the assembly 10. In such an embodiment, the fastener holes 94 in the air bag 14, the fastener holes 38 of the housing side panels 31A and 31B, and the fastener holes 86 and 88 in the diffuser device 16 are spaced to correspond with each other, with a selected fastener 96 passed through the aligned fastener holes.

In the assembly 10, the inflation gas diffuser device 16 is interposed between the inflator inflation gas outlet ports 23 and the air bag inflation gas inlet opening 92 to effect inflation gas diffusion and redirection.

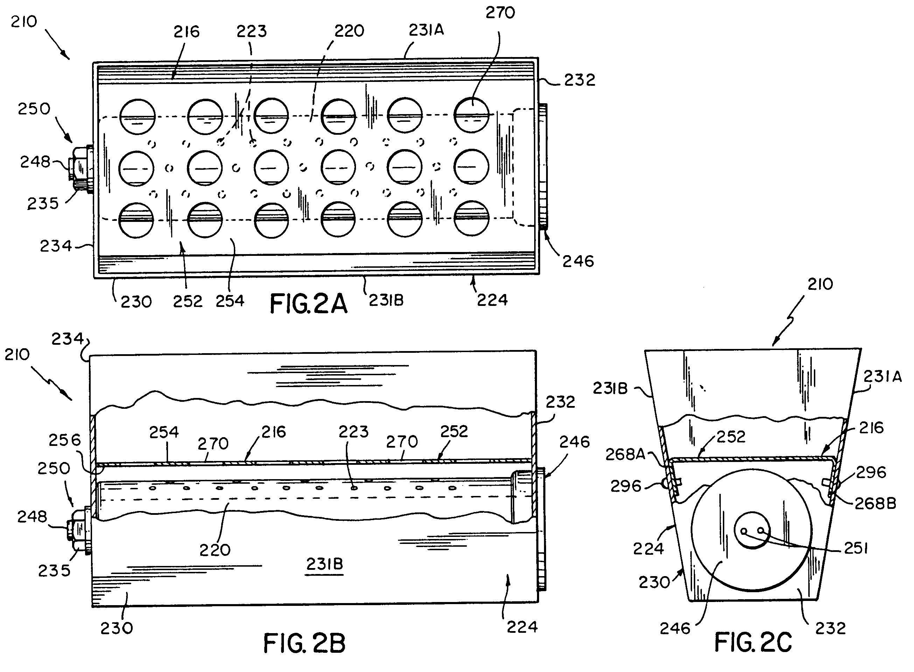

FIGS. 2(A-C) illustrate an air bag module assembly 210 having a diffuser device 216, in accordance with one embodiment of the invention. The air bag module assembly 210, similar to the air bag module assembly 10 shown in FIG. 1 and described above, includes an inflator 220 with gas outlet or exhaust ports 223 spaced along the longitudinal length thereof. The inflator 220 is housed within a reaction canister or housing 224 formed of a first member 230, having a roll-form shape, and including side panels, shown as first and second side panels 231A and 231B, respectively. The reaction housing assembly 224 also includes first and second end plates 232 and 234, respectively. Also, a nut 235 is joined to an inflator stud 248 at an inflator end 250 to further secure the inflator 220 within the assembly 210. The inflator 220 further includes wiring connections 251 at opposite inflator end 246, as are known, to permit, for example, connection of the inflator with one or more crash sensors (not shown).

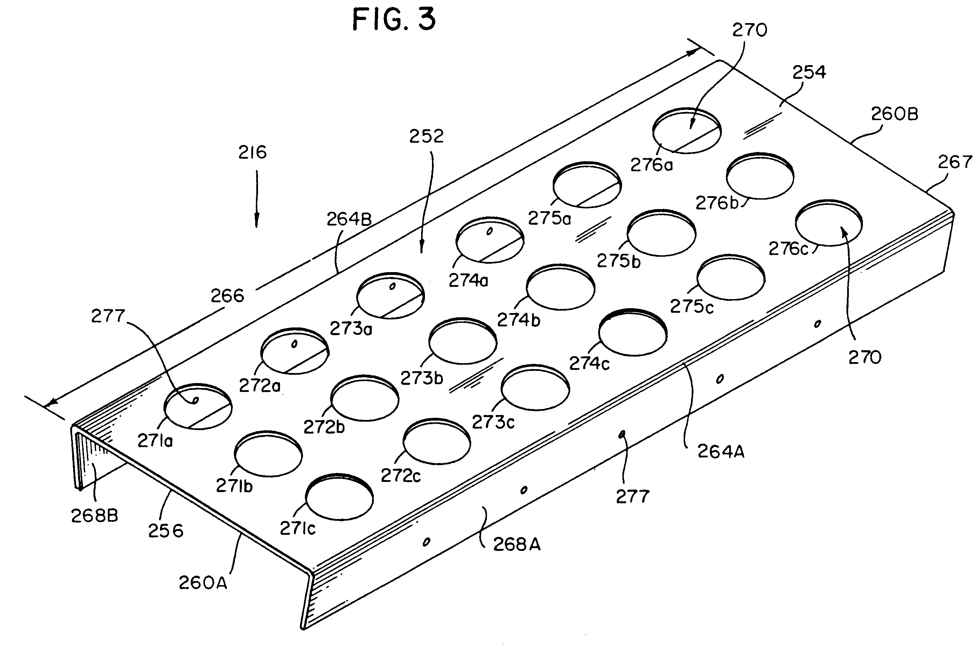

Now turning now to FIG. 3, there is shown the diffuser 216 which includes at least one substantially flat face member 252 having a topside 254; an underside 256; two opposed lateral sides 260A and 260B, respectively; two opposed longitudinal sides 264A and 264B, respectively; having a longitudinal length 266; a peripheral edge 267 defined about the lateral and longitudinal sides 260 and 264, respectively; and having a one piece construction including side walls 268A and 268B, about the peripheral edge 267 at the longitudinal sides 264A and 264B, respectively.

The face member 252 includes gas flow directing means whereby the flow of gas through the member and thus through the diffuser device and into the air bag can be directed as the bag is inflated. Thus, the diffuser 216 serves to effect diffusion and redirection of the inflation gas upon passage thereof from the inflator to the air bag.

As shown, the gas flow directing means include, for example, a plurality of spaced apart apertures 270 in the face member 252 to permit a gas to flow through the member 252, from the underside 256 to the topside 254, and thus through the device 216. In general, the longitudinal length 266 of the face member 252 is generally perpendicular to the direction of gas flow through the diffuser 216.

In the diffuser 216, the spaced apart apertures 270 are in the form of six columns, each column including three equally and symmetrically spaced and shaped circular openings, 271(a-c), 272(ac), 273(a-c), 274(a-c), 275(a-c), and 276(a-c), respectively. As perhaps best viewed in FIG. 2A, in assembly 210, the diffuser apertures 270 are in substantial non-alignment with the inflation gas outlet ports 223 of the inflator 220. As a result, gas normally emitted from the gas outlet ports 223 (i.e., gas emitted perpendicular to the plane of the inflator surface) impinges on the underside 256 of the face member 252. This results in the gas flowing out of the inflator 220 undergoing a change in direction prior to passage to the corresponding air bag. That is, the gas flow changes direction between exiting from the inflator and passing through the diffuser face member.

It has been found that, upon contact, heavier particles carried by the inflation gas exiting from the inflator tend to deposit on relatively cool surfaces. The inclusion of a diffuser device wherein the inflation gas apertures are in substantial non-alignment with the inflator inflation gas outlet ports helps assure impingement of the inflation gas onto the diffuser and thus increase the extent of particle deposition thereon. As a result, such diffuser devices and assemblies therewith can advantageously result in the inflation gas passed into the air bag carrying a relatively lesser amount of particulate material, as compared to similar inflation gas which has not impinged onto a such a surface.

Returning to FIG. 3, the side walls 268A and 268B each include one or more fastener holes 277 in spaced relationship such as to correspond to the positioning of the fastener holes 38 of the housing side panels 31A and 31B, for example. The diffuser 216 is fastened to the housing by means of fasteners 296, such as screws or rivets, which are passed through the reaction canister side panels 231A and 231B, respectively, and through fastener holes in the corresponding diffuser side walls 268A and 268B, respectively, such as shown in FIG. 2C.

It will be understood that these same fasteners used to attach the diffuser with the reaction housing can, if desired, be used to also join the air bag into the assembly such as by having the fastener additionally pass through fastener holes in the air bag. For example a single fastener can be passed through fastener holes in the reaction housing, the air bag, and the diffuser device.

It is also to be understood that the invention in its broader terms is not limited by the method of attachment or fastening of either the diffuser or the air bag within the assembly. Thus, to facilitate illustration and comprehension of various of the features involved in the invention, FIGS. 2(A-C) as well as the following air bag module assembly drawings have been simplified by not showing the corresponding air bag.

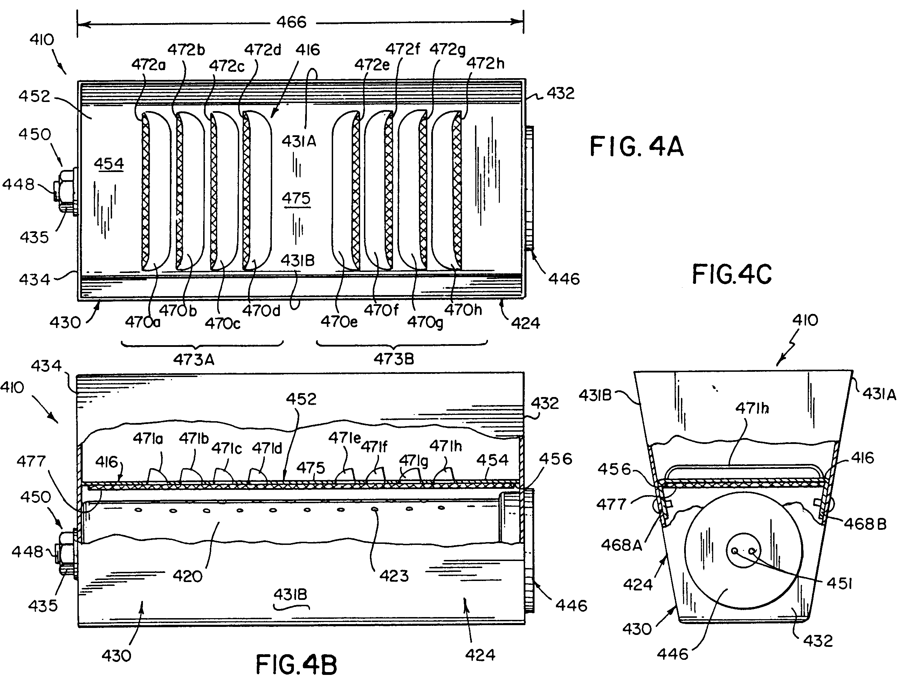

FIGS. 4(A-C) illustrate an air bag module assembly 410 which includes a diffuser 416 in accordance with an alternative embodiment of the invention. As with the above described assemblies 10 and 210, the air bag module assembly 410 includes an inflator 420 with gas outlet or exhaust ports 423. The inflator 420 is housed within a reaction canister or housing 424 formed of a first member 430, having a roll-form shape, and including side panels, shown as first and second side panels 431A and 431B, respectively. The reaction housing assembly 424 also includes first and second end plates 432 and 434, respectively. Also, a nut 435 is joined to an inflator stud 448 at an inflator end 450 to further secure the inflator 420 within the assembly 410. The inflator 420 further includes wiring connections 451 at opposite inflator end 446, as are known, to permit, for example, connection of the inflator with one or more crash sensors (not shown).

The diffuser 416, like the above-described diffusers 16 and 216, includes a generally rectangular face member 452 having a topside 454, an underside 456, with a longitudinal length 466 and having a one piece construction including side walls 468A and 468B.

The face member 452 also includes gas flow directing means whereby the flow of gas through the member and thus through the diffuser device and into the air bag can be directed as the bag is inflated. In the illustrated embodiment, the gas flow directing means include, for example, a plurality of louvered apertures 470(a-h). Each of the louvered apertures 470(a-h) includes a slanted slat 471(a-h) positioned on the topside 454 of the face member 452, adjacent an opening 472(a-h). Thus, the louvered apertures 470(a-h) serve to convey and direct inflation gas from the inflator to the air bag. That is, the louvered apertures 470(a-h) in the face member 452 permit a gas to flow through the member 452, from the underside 456 to the topside 454, and thus through the device 416. In general, the longitudinal length 466 of the face member 452 is generally perpendicular to the direction of gas flow through the face member 452.

In the diffuser 416, the spaced apart louvered apertures 470(a-h) are in the form of two sets of equally numbered louvered apertures, i.e., 473A (comprised of the louvered apertures 470a, 470b, 470c and 470d) and 473B (comprised of the louvered apertures 470e, 470f, 470g and 470h), respectively, but wherein the slanted slats of the two sets are angled in opposed directions, such as to be approximately perpendicular to each other, thereby directing the inflation gas towards the sides of the corresponding air bag (not shown).

It will be appreciated that in such a louvered diffuser, the louvered apertures 470(a-h) are preferably in "substantial non-alignment" with the inflator inflation gas outlet ports in that gas normally emitted from the gas outlet ports (i.e., gas emitted perpendicular to the plane of the inflator surface) impinges onto the diffuser prior to passage into the air bag. As a result, such diffuser devices and assemblies therewith can advantageously result in the inflation gas passed into the air bag carrying a relatively lesser amount of particulate material.

Additionally, louvered apertures can provide a more positive redirection of the inflation gas passed through the diffuser. One attractive use of a diffuser device with louvered apertures is in directing inflation gas to the sides, rather than the center of the corresponding air bag. As a result of the outwardly directed gases, the side portions of the air bag can preferably deploy first, leaving the center region or cavity of the air bag to deploy more slowly resulting in this center region being, upon deployment, less fully inflated. The bag can then serve to cushion the occupant while expending a large portion of the deployment energy expanding in directions away from the occupant. As a result, the need for air bag tethers can be reduced or eliminated.

It will be appreciated that for such a louvered diffuser, design parameters such as number, placement, orientation, angle of slat slant, opening dimensions can be appropriately selected by one skilled in the art and guided by the teachings herein provided.

In addition, the face member 452 of the diffuser 416 includes an extended region 475 whereat the face member is solid, that is, in this region there are no openings to permit gas passage through the face member 452. The inclusion of such a region can, for example, be advantageously used to effect desired inflation gas flow and thus desired air bag deployment. In diffuser 416, the openingfree region 475 is centrally positioned relative to the face member with the louvered apertures symmetrically placed thereabout. Such an arrangement can, for example, be used in applications to increase the speed with which the opposed sides of the corresponding air bag deploy, as compared to the speed with which the central portion of the air bag would deploy. It is to be appreciated that the use, location, placement, and dimensions of any such openingfree or "blank" face region in a diffuser of the invention can be selected to satisfy the requirements for particular applications, as will be apparent to those skilled in the art and guided from the teachings herein provided.

The assembly 410 also includes a screen particulate barrier 477, adjacent the diffuser face member underside 456, and thereby underlying the openings 472(a-h) in the face member 452. As described above, heavier particles carried by the inflation gas exiting from the inflator tend to deposit on relatively cool surfaces that the particles contact. The inclusion of a screen through which the gases from the inflator pass, can provide additional surface by which such particles can desirably be removed from the inflation gas prior to passage into the air bag.

In practice, a screen of a metallic material (e.g., steel or aluminum) such as mesh having openings of 0.841-1.19 mm (ANSI 16-20 mesh) of wire having a diameter of 0.23-0.76 mm (0.009-0.03 ins) can be used. The screen can be appropriately secured to or joined with the underside of the diffuser face member such as by being spot welded thereto.

It will be understood that the specific design parameters of such a screen barrier (e.g., material of construction, mesh size, wire diameter, etc.) can be appropriately adjusted in view of application particulars such as the flow rate of gas being passed therethrough, the amount-of particulate material in that gas, the degree of particulate removal desired, etc. It is also to be appreciated that the screen material can, for example, be in the nature of a woven or expanded material, e.g., metal, as desired.

It will be appreciated that the use of such a particulate barrier as a part of the diffuser device in accordance with the invention is not limited to those diffusers having louvered apertures. That is, the benefits attendant such use, e.g., increased particulate removal, can also be realized in conjunction with diffuser wherein the apertures are not louvered, as with the diffuser 216 shown in FIGS. 2(A-C) and 3, for example.

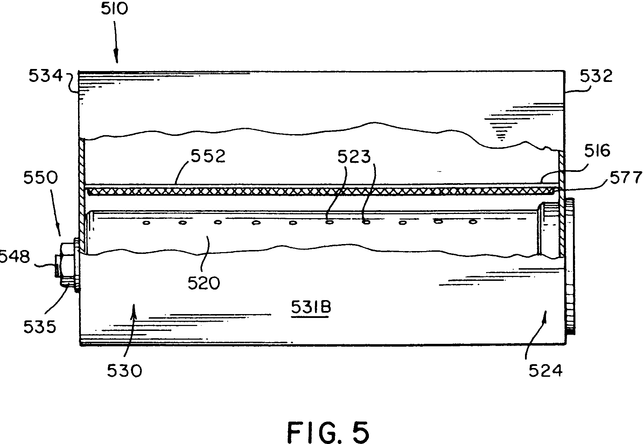

FIG. 5 is a partial sectional side view of an air bag module assembly 510, similar to that shown in FIG. 2B, and including a diffuser 516 similar to diffuser 216 but now showing the inclusion of a screen member 577 joined to the underside of the face member 552 to underlie the apertures therein. As with the assembly 210, the assembly 510 includes an inflator 520 with gas outlet or exhaust ports 523. The inflator 520 is housed within a reaction canister or housing 524 formed of a first member 530, having a roll-form shape, and including side panels (only side panel 531B can be seen in the FIG. 5 side view). The reaction housing assembly 524 also includes first and second end plates 532 and 534, respectively. Also, a nut 535 is joined to an inflator stud 548 at an inflator end 550 to further secure the inflator 520 within the assembly 510.

As described above, heavier particles carried by the inflation gas exiting from the inflator tend to deposit, upon contact, with relatively cool surfaces. Thus, the inclusion of a screen in the diffuser 516 and through which the gases from the inflator pass, can provide additional surface by which such particles can desirably be removed from the inflation gas prior to passage into the air bag.

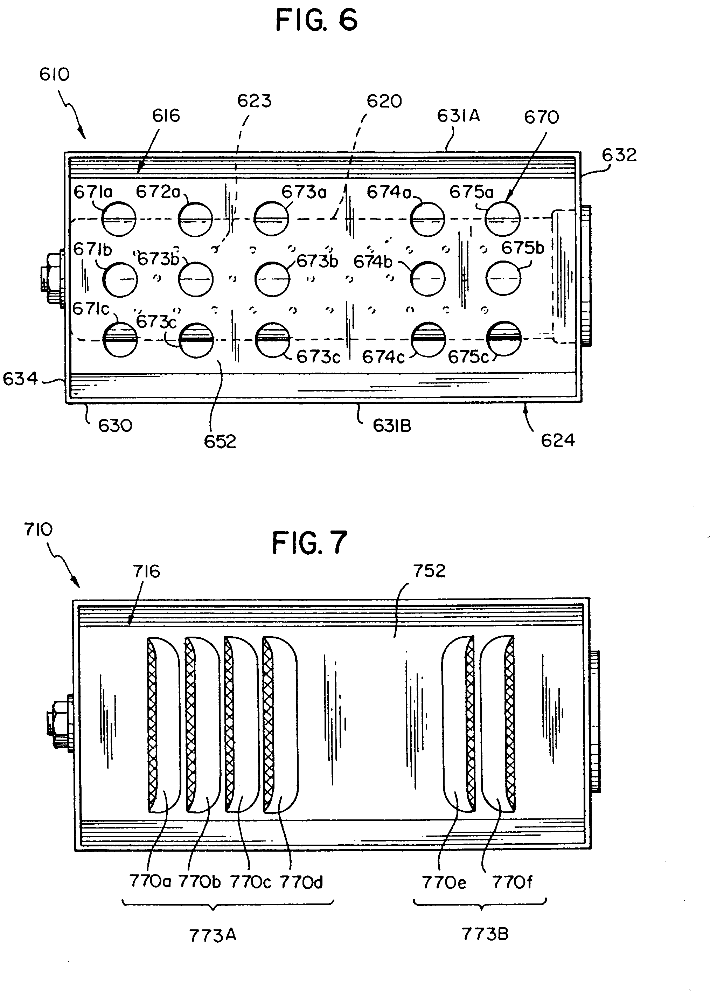

It will also be appreciated that the apertures in the face member need not be symmetrically arranged. For example, FIGS. 6 and 7 illustrate air bag module assemblies having diffuser devices similar to those shown and described above with reference to FIGS. 2(A-C) and 4(A-C), respectively.

First turning to FIG. 6, there is illustrated an air bag module assembly 610 having a diffuser device 616, similar to the assembly 210 and the diffuser 216, described above. The air bag module assembly 610 includes an inflator 620, with gas outlet or exhaust ports 623, housed within a reaction canister 624 formed of a first member 630, having a roll-form shape, and including side panels, shown as first and second side panels 631A and 631B, respectively. The reaction housing assembly 624 also includes first and second end plates 632 and 634, respectively.

The diffuser 616 includes a face member 652 which includes a plurality of spaced apart apertures 670 as gas flow directing means whereby the flow of gas through the member and thus through the diffuser device and into the air bag can be directed as the bag is inflated. Similar to the apertures 270 in the diffuser 216, the apertures 670 of the diffuser 616 are in substantial nonalignment with the inflation gas outlet ports 623 of the inflator 620.

In the diffuser 616, however, the apertures 670 are in a non-symmetrical arrangement. That is, in the diffuser 616, there are five unevenly spaced columns, each column including three equally and symmetrically spaced and shaped circular openings, 671(a-c), 672(a-c), 673(a-c), 674(a-c), and 675(a-c), respectively.

Similarly, FIG. 7 illustrates an air bag module assembly 710 having a diffuser device 716, similar to the assembly 410 and the diffuser 416, described above. In diffuser 716, however, the louvered apertures in the face member are in a non-symmetrical arrangement. That is, in the diffuser 716, the louvered aperture set 773A includes four similarly shaped and dimensioned louvered apertures 770(a-d) while the louvered aperture set 773B includes only two similarly shaped and dimensioned louvered apertures 770e and 770f.

It will be appreciated that such non-uniform, unsymmetrical aperture arrangement for diffusers can find application when, for example, non-symmetric bag deployment is desired. It will be appreciated that such an arrangement will typically result in a greater flow of gas through the diffuser in those face portions of the diffuser having a greater area of openings. It is to be understood that "non-symmetric bag deployment" includes both deployment of a bag which does not have a symmetric shape as well as deployment of a symmetrically shaped bag non-symmetrically or non-uniformly, such as when one or more portions of the bag are desirably sought to be inflated and/or deployed prior to the inflation or deployment of other portions of the bag. Thus, for example, such an application may include a passenger side assembly wherein the bag additionally deploys to cushion a front seat passenger seated in the middle of the front seat of the vehicle.

Typically, the diffuser of the invention will be fabricated from a ductile sheet material, typically a metal sheet material, such as steel or aluminum (either formed or extruded, for example), with steel, particularly low carbon steel, generally being preferred due to its relatively greater structural strength, ease of use and comparatively low cost. It is to be understood, however, that the diffuser of the invention can be fabricated of any suitable material, that is, the diffuser can be made of any material capable of withstanding and properly operating under the conditions of use associated with such inflatable restraining systems including temperature, such as temperatures of up to about 538°C (1000°F), as can be realized with modules containing certain types of inflators.

In a particularly preferred method of fabrication, a single flat pattern of a selected material of construction, such as a sheet of steel or aluminum, for example, is used and by means of selectively bending and appropriately cutting or punching the metal sheet, the final form of the diffuser device is achieved.

In general, the diffuser can take whatever shape and/or size required by the particular use, with the size generally determined by the size of the inflator and the size of the bag to be attached thereto. For example, if desired, the diffuser can include two or more substantially flat face members joined or formed together at a selected angle.

It is to be understood that the apertures in the face member can vary in parameters such as size, shape and arrangement and that one skilled in the art guided by the teachings provided herein will appreciate that such parameters can be selected to appropriately tailor the design of a diffuser in order to satisfy the requirements for a particular assembly.

The invention illustratively disclosed herein suitably may be practiced in the absence of any element, part, step, component, or ingredient which is not specifically disclosed herein.

## Claims

1. An inflatable restraint air bag module (10) comprising:
an inflatable air bag (14) having an inflation gas inlet opening (92),
an inflator (20) having inflation gas outlet means (23) for emitting inflation gas through upon actuation of the inflator (20),
a reaction canister (24) forming a housing for the air bag (14) and the inflator (20), and
an inflation gas diffuser (216) interposed between the inflator inflation gas outlet means (23) and the air bag inflation gas inlet opening (92) to effect inflation gas diffusion and redirection, said inflation gas diffuser (216) comprising at least one substantially flat face member (52) including a plurality of spaced inflation gas passage apertures (270) for conveying inflation gas from the inflator (20) to the air bag, said spaced inflation gas passage apertures (270) being in substantial non-alignment with the inflation gas outlet means (23).

2. An inflatable restraint air bag module (410) comprising:
an inflatable air bag having an inflation gas inlet opening,
an elongated inflator (420) having inflation gas outlet means (423) for emitting inflation gas through upon actuation of the inflator (420),
a reaction canister (424) forming a housing for the air bag and the inflator (420), and
an inflation gas diffuser (416) interposed between the inflator inflation gas outlet means (423) and the air bag inflation gas inlet opening to effect inflation gas diffusion and redirection, said inflation gas diffuser (416) comprising at least one substantially flat face member (452) having a topside (454) and including at least one louvred aperture (470a-h) each comprising a slanted slat (471a-h) positioned on the topside (454) of said face member (452) for conveying and directing inflation gas from the inflator (420) to the air bag.

3. The module (410) of claim 1 wherein at least one of said apertures (470a-h) is a louvred aperture comprising a slanted slat (471a-h) positioned on the topside (454) of said face member (452) for conveying and directing inflation gas from the inflator (420) to the air bag.

4. The module (210) of any preceding claim wherein the diffuser (216) includes a plurality of said apertures (270) which are uniformly and symmetrically spaced.

5. The module (610, 710) of claim 1, 2 or 3 wherein the diffuser (616, 716) includes a plurality of said apertures (670, 770) which are in a non-symmetric arrangement.

6. The module (410) of any preceding claim wherein the diffuser (416) additionally comprises a screen particulate barrier (477).

7. The module (410) of any preceding claim wherein the diffuser face member (452) additionally comprises a centrally positioned region (475) free of apertures.

8. The module (210, 410) of any preceding claim wherein the inflator (220, 420) is an elongated inflator having a longitudinal length and the inflation gas outlet means comprises a plurality of inflation gas outlet ports (223, 423) spaced along the longitudinal length thereof to emit inflation gas upon actuation thereof and wherein the diffuser apertures (270, 470a-h) are in substantial non-alignment with the inflation gas outlet ports (223, 423).

9. The module (410) of claim 2 and any one of claims 4 to 8 wherein the diffuser (416) includes two sets (473A, 473B) of said louvred apertures (470a-h) the slanted slats (471a-d) of one set (473A) being angled in the opposite direction to those (471e-h) of the other set (473B).

10. An inflation gas diffuser (416) for an inflatable restraint air bag module (410) which comprises at least one substantially flat face member (452) including at least two sets (473A, 473B) of louvred apertures (470a-h) for conveying and directing inflation gas from an inflator (420) to an air bag, each of said louvred apertures (470a-h) comprising a slanted slat (471a-h) positioned on one side of said face member (452), with the slanted slats of the two sets of louvred apertures angled in opposed directions and wherein the two sets of louvred apertures are spaced apart by means of an opening-free, solid face region (475) and wherein a screen particulate barrier (477) is joined at the other side of said face member to underlie the louvred apertures.
